# FASCICULE DE BREVET EUROPEEN

(11) **EP 0 998 540 B1**
(45) Date de publication et mention de la délivrance du brevet: **14.04.2004**
(21) Numéro de dépôt: 98938729.5
(22) Date de dépôt: 10.07.1998
(51) Int. Cl.: C09K 7/02, C08B 37/00

(54) **FLUIDES UTILISABLES DANS L'EXPLOITATION DU PETROLE COMPRENANT DE LA GOMME XANTHANE DESACETYLEE ET AU MOINS UN COMPOSE AUGMENTANT LA FORCE IONIQUE DU MILIEU**
FLÜSSIGKEITEN ZUR ÖLGEWINNUNG DIE DEACETYLIERTES XANTHAN UND MINDESTENS EINE VERBINDUNG ZUR ERHÖHUNG DER IONISCHEN KRAFT DES MITTELS ENTHALTEN
FLUIDS USEFUL FOR OIL MINING COMPRISING DE-ACETYLATED XANTHANE GUM AND AT LEAST ONE COMPOUND INCREASING THE MEDIUM IONIC STRENGTH

(30) Priorité: 17.07.1997 FR 9709087
(43) Date de publication de la demande: 10.05.2000
(73) Titulaire: RHODIA CHIMIE, 92408 Courbevoie Cédex (FR)
(72) Inventeur: LANGLOIS, Bruno, F-91700 Sainte Geneviève des Bois (FR)
(74) Mandataire: Wattremez, Catherine
(86) Numéro de dépôt international: PCT/FR1998/001514
(87) Numéro de publication internationale: WO 1999/003948

(56) Documents cités:
- EP-A- 0 765 939
- GB-A- 1 080 248
- US-A- 3 096 293
- US-A- 4 186 803
- US-A- 4 218 327
- US-A- 4 868 293

## Description

La présente invention a trait à des compositions dont les applications se trouvent dans le domaine de l'extraction du pétrole, que ce soit pour les opérations de mise en place du puits, avec les opérations de forage, les opérations dites de "work-over", de complétion, que de l'exploitation proprement dite du gisement pétrolifère.

Plus particulièrement, l'invention a trait à des compositions utilisées dans des fluides de forage pétroliers mis en oeuvre en présence d'eau et de boues.

Les opérations de forage consistent à creuser un trou au moyen d'un trépan en carbure de tungstène notamment, fixé à des tiges creuses vissées bout à bout. Le plus souvent, de la boue comprenant des additifs en solution aqueuse, est injectée dans le train de tiges. Cette boue remonte ensuite par le trou de sonde, extérieurement aux tiges, et entraîne des éléments de roches détachés lors de l'opération de forage. Dans le même temps, la boue chargée des roches établit une contre pression qui consolide le trou. La boue est ensuite extraite du trou de forage pour être débarrassée des roches qu'elle contient avant d'être injectée à nouveau dans les tiges creuses de forage.

Dans de telles conditions de mise en oeuvre, il est essentiel que les additifs ajoutés à la boue confèrent à celle-ci un comportement rhéologique particulier. En effet, lorsqu'il est soumis à de très fortes contraintes de cisaillement et des températures élevées, ainsi que c'est le cas au niveau du trépan, le fluide doit avoir une viscosité suffisamment faible pour faciliter son évacuation vers l'extérieur des tiges creuses. Par contre, ce même fluide, chargé des roches, doit présenter une viscosité élevée afin de maintenir en suspension les déblais entraînés lors du forage.

L'utilisation de polysaccharides à haut poids moléculaire, tels que la gomme xanthane par exemple, comme additif des boues ou fluides de forage, est bien connue afin de conférer au dit fluide le type de comportement rhéologique particulier décrit ci-dessus, et appelé rhéofluidifiant.

Cependant, si la gomme xanthane présente des avantages indéniables dans ce type d'application, ils restent néanmoins limités car les propriétés rhéologiques du fluide de forage se dégradent au cours du temps et ceci d'autant plus rapidement que la température à laquelle il est soumis avoisine ou dépasse 120°C. Or dans les opérations de forage pétrolier, c'est bien souvent que de telles températures sont atteintes. En effet, l'échauffement de la boue provoqué par le mouvement du trépan est important. De plus, la profondeur du gisement et sa situation géographique ont aussi des conséquences importantes sur la température à laquelle est soumis le fluide. Ainsi on peut atteindre sans difficulté des températures au fond du puits de cet ordre de grandeur car la profondeur atteinte lors des opérations de forage est de l'ordre du kilomètre, voire supérieure. En outre il existe des puits pour lesquels la température de la croûte terrestre présente déjà une température plus élevée qu'ailleurs (puits chauds), ce qui accentue encore l'effet de l'augmentation de la température du sous-sol avec la profondeur.

En cycle normal, l'effet provoqué par de telles températures n'est pas systématiquement rédhibitoire, en tout cas en début d'utilisation de l'additif, car la durée pendant laquelle le fluide se trouve à ces fortes températures est limitée. Cependant, il faut savoir qu'il n'est pas rare de devoir arrêter les opérations de forage pour ajouter des tiges ou pour effectuer un remplacement de l'un des outils, le trépan par exemple. Or dans un tel cas, le fluide de forage reste pendant une durée relativement longue dans des conditions de température élevée.

Lorsque le fluide est soumis à de telles températures, la viscosité de ce dernier se dégrade considérablement et bien souvent le rôle de suspension des déblais arrachés lors de l'opération de forage n'est plus maintenu. Ceci peut donc être l'une des causes d'un colmatage du puits par dépôt des roches au fond de ce dernier.

Dans le brevet américain US 5 591 699 est décrite l'association de gomme xanthane non acétylée avec du guar comme agent de suspension de déblais dans le puits de forage. Ce brevet met en évidence une synergie entre les deux constituants, qui fait que les quantités présentes en l'un et l'autres de ces éléments est faible. Cependant, l'association en question ne pourra garder ses propriétés de viscosité et d'aptitude à conserver les déblais en suspension lorsque la température sera supérieure à 100°C, ce qui est courant dans l'exploitation de puits pétrolifères, du fait, entre autres, de la grande sensibilité thermique du guar.

Le brevet US 3 729 460 décrit une composition épaississante obtenue par traitement d'une gomme xanthane avec une base. Le produit résultant, présentant une résistance thermique améliorée par rapport à la gomme xanthane initiale, peut être utilisé dans la récupération assistée du pétrole. Cependant, ainsi que cela est indiqué dans le texte de ce brevet, le polymère obtenu par le traitement avec la soude est modifié de manière substantielle par rapport à la structure de la gomme xanthane initiale et cause vraisemblablement une hydrolyse. En effet, comme cela est d'ailleurs clairement indiqué dans ledit brevet, il se produit une dépolymérisation partielle et une hydrolyse de la gomme xanthane.

Il est de même indiqué dans le brevet US 3 319 715, l'utilisation de gomme xanthane associée à un dihydroxyde de magnésium, en tant que réducteur de filtrat, stable à des températures de l'ordre de 120°C. Cependant, la gomme xanthane en question est très spécifique, car elle est en fait constituée d'un polymère acétylé comprenant 8 motifs, dans les proportions suivantes mannose/glucose/glucuronate, respectivement 3/3/2.

La présente invention a pour but de proposer une solution au problème de stabilité des propriétés rhéologiques du fluide à des tem ératures élevées.

Ainsi, un objet de l'invention consiste en des compositions utilisées dans des fluides destinés à l'exploitation du pétrole, exempts de guar, et comprenant, en association, de la gomme xanthane désacétylée, sous la forme d'un polypentamère, et au moins un composé augmentant la force ionique du milieu.

Il a en effet été trouvé de façon tout à fait inattendue, que la gomme xanthane désacétylée, lorsqu'elle entre dans la composition de tels fluides, en association avec au moins un composé précité, plus particulièrement un sel d'acide minéral ou éventuellement organique, permet de conférer au système une stabilité des propriétés rhéologiques à des températures pouvant être aussi élevées que 140°C.

Il est à noter que l'homme du métier ne pouvait s'attendre à avoir de tels résultats.

Avant toute chose, il faut rappeler que la gomme xanthane standard, c'est-à-dire celle qui comprend des motifs acétyles et pyruvyles, présente une température de transition voisine de 90°C à la concentration de 0,3 % dans de l'eau distillée. Il est précisé que par température de transition, on parle d'une température transconformationnelle c'est-à-dire la température à laquelle le polymère en solution passe d'une conformation ordonnée à une conformation désordonnée. Ce changement de conformation est parfaitement réversible et n'affecte pas la masse moléculaire de ladite gomme. Cependant, si le fluide comprenant la gomme xanthane est mis en oeuvre à une température supérieure à celle de transition dudit polymère, les propriétés rhéologiques de ce fluide sont fortement modifiées, et l'on constate alors une chute brutale de la viscosité, indésirable dans l'application visée. Ainsi, dans la pratique, l'homme du métier recherche une température de transition la plus élevée possible pour s'affranchir de ce handicap.

Si l'on utilise, comme éléments constitutifs du fluide, une association de gomme xanthane standard et de sels, comme le chlorure de sodium par exemple, on remarque que l'on peut augmenter la température de transition de la gomme xanthane jusqu'à des valeurs aussi élevées que 140°C. Malheureusement, l'aspect bénéfique de cette association est limité par l'apparition de phénomènes supplémentaires liés à la dégradation thermique de la gomme xanthane. En effet, lorsque l'on maintient le fluide à des températures élevées, des phénomènes de dépolymérisation se produisent qui diminuent la masse du polymère et modifient les propriétés rhéologiques du fluide.

Une façon de compenser ce problème est d'introduire régulièrement de la gomme xanthane. Cependant, quand la température d'utilisation du fluide dépasse la température de transition du polymère, occasionnant, par voie de conséquence, une perte des propriétés rhéologiques du fluide, les phénomènes de dégradation s'amplifient rendant très difficile, voire quasiment impossible toute utilisation, même par addition de gomme xanthane.

Dans le cas de la gomme xanthane désacétylée, lorsque celle-ci est employée seule à la concentration de 0,3% dans l'eau distillée, la température de transition est voisine de 60°C. Ainsi une telle température de transition présente un désavantage par rapport à la gomme xanthane standard, puisque les pertes de viscosité brutales indésirables se produisent à une température plus faible que pour la gomme xanthane standard, réduisant alors le domaine d'utilisation de la gomme.

Comme on peut le constater, ces résultats ne conduisaient pas l'homme de l'art à choisir la gomme xanthane désacétylée, dans le but de préparer des fluides de forage stables à des températures élevées.

Or, on a remarqué de façon totalement inattendue qu'il existait un effet de synergie entre la gomme xanthane désacétylée et les sels. En effet, dans ces conditions, à la même concentration de 0,3% et force ionique imposée par le sel, la température de transition est identique à celle de la gomme xanthane standard et non inférieure, comme dans le cas de l'eau distillée. Cet effet est d'autant plus intéressant que la gomme xanthane désacétylée présente, en outre, une stabilité chimique très supérieure à la gomme xanthane standard, dans sa forme ordonnée. Par conséquent, cette gomme xanthane désacétylée est parfaitement stable en présence de sels à des températures où la gomme xanthane standard se dégrade.

Ainsi, l'association gomme xanthane désacétylée et sels selon la présente invention permet d'obtenir un fluide de forage qui peut être mis en oeuvre à des températures élevées, de l'ordre de 140°C, sans qu'il soit nécessaire de compenser des pertes de propriétés rhéologiques par addition de quantités importantes de gomme xanthane, comme c'était le cas avec l'emploi de gomme xanthane standard.

De plus, on a constaté que la gomme xanthane désacétylée contrairement à la gomme xanthane standard, développait davantage de viscosité dans sa forme désordonnée en présence de sel, ce qui permet à l'homme de métier de limiter les problèmes techniques rencontrés sur le terrain si les conditions de mise en oeuvre du fluide se font à des températures supérieures à la température de transition.

On a enfin remarqué, que d'une façon imprévue, la gomme xanthane désacétylée associée à au moins un composé augmentant la force ionique du milieu, présentait aussi des caractéristiques de réducteur de filtrat améliorées. Il est rappelé que le rôle des réducteurs de filtrat est d'éviter la perte de fluide dans le puits par infiltration dans les roches.

Par ailleurs, on a trouvé de manière totalement surprenante que la gomme xanthane désacétylée, associée à un sel et à un réducteur de filtrat classique, améliore de manière considérable, les propriétés de cette association. En effet, il existe tout d'abord un effet de synergie important entre la gomme xanthane et le réducteur de filtrat. Mais l'effet de synergie le plus caractéristique est mis en évidence lorsque la boue est testée à des températures élevées. Contrairement aux réducteurs de filtrat classiques dont les propriétés sont fortement dégradées après un vieillissement à chaud, la boue comprenant de la gomme xanthane désacétylée, associée à un sel et à un autre réducteur de filtrat usuel dans le domaine, présente des propriétés de contrôle de filtrats encore améliorées par rapport aux boues n'ayant pas subi un tel traitement thermique.

Mais d'autres avantages et caractéristiques apparaîtront plus clairement à la lecture de la description et des exemples qui vont suivre.

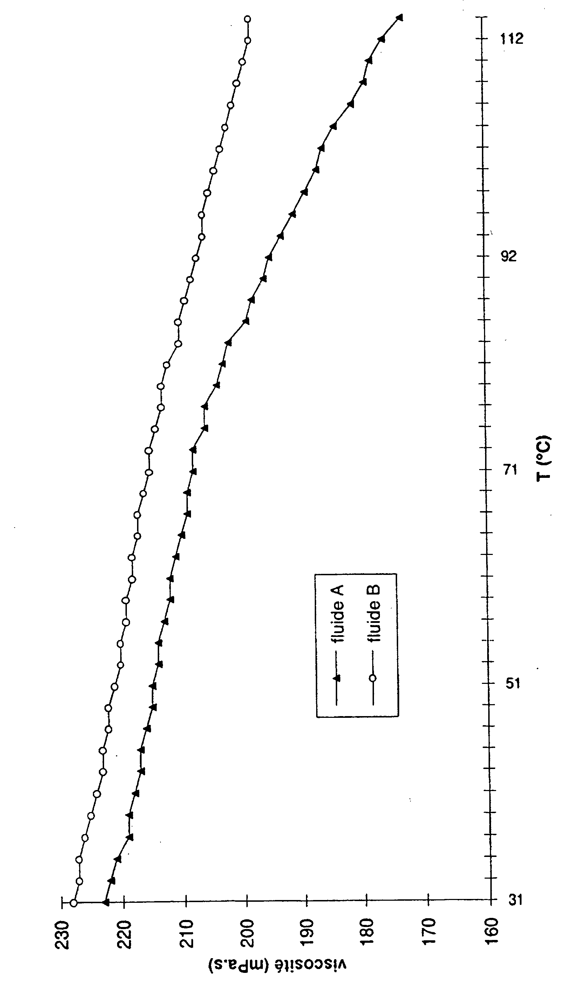

La figure montre la variation de la viscosité, en fonction de la température, d'une boue conforme à l'invention et d'une boue comparative, comprenant de la gomme xanthane standard.

Avant de décrire le fluide selon l'invention, il faut préciser que ce dernier est particulièrement approprié pour être utilisé en tant que fluide de forage.

Cependant ses propriétés rhéologiques, sa filtrabilité, sa compatibilité avec de nombreux composants, le rendent tout aussi convenable pour des applications ultérieures au forage proprement dit et/ou des applications liées à l'exploitation même du gisement.

Ainsi, moyennant une adaptation de ses caractéristiques, comme notamment la viscosité, le fluide peut être employé pendant les opérations dites de "work-over". Il est de même possible d'utiliser le fluide, toujours après adaptation de ses caractéristiques rhéologiques, notamment, pour la récupération assistée du pétrole.

Pour des raisons de simplification, dans la suite du texte ne sera mentionnée que l'application du fluide selon l'invention dans les opérations de forage, sachant que l'utilisation d'un tel fluide n'est pas limitée à cette seule application.

Comme cela a été mentionné auparavant, le fluide selon l'invention comprend de la gomme xanthane désacétylée.

Dans le cadre de la présente invention, on utilise plus particulièrement une gomme xanthane désacétylée sous la forme d'un polypentamère.

Il est rappelé que la gomme xanthane standard est un hétéropolysaccharide anionique. Les unités répétitives du polymère sont un pentamère composé de cinq sucres, soit deux motifs de glucose pour les unités répétées de la chaîne principale qui forme le squelette du polysaccharide, deux motifs de mannose, et un motif glucuronique pour les chaînes latérales. Généralement, cette structure de base est acétylée et pyruvylée avec des taux qui varient naturellement. Les groupements acétyles se rencontrent sur le premier mannose, ou mannose interne, en d'autres termes, celui qui est lié à la chaîne principale par un glucose, et sur le dernier mannose ou mannose externe de la chaîne latérale. Sur le dernier mannose, on peut trouver également un groupement pyruvyle en lieu et place de l'acétyle.

Par gomme xanthane désacétylée, aux fins de la présente invention, on entend une gomme xanthane de laquelle on a ôté au moins une partie des groupements acétyles. On entend couvrir aussi, par ce terme, une gomme xanthane présentant une teneur en groupements acétyles plus faible que celle obtenue pour la gomme xanthane standard, du fait de caractéristiques génétiques particulières introduites dans le micro-organisme ; caractéristiques qui ont pour résultat la synthèse directe d'un polysaccharide présentant un taux en groupements acétyles plus faible.

Selon un mode particulièrement avantageux de la présente invention, le polysaccharide entrant dans la composition du fluide a un taux d'acétyle inférieur à 3%; plus particulièrement compris entre 0 et 3 %, et de préférence compris entre 0 et 2%.

Selon un mode de réalisation particulièrement avantageux et préféré, de la présente invention, on met en oeuvre un polymère ne comprenant plus ou pas de motifs acétyles, selon que ladite gomme xanthane est respectivement, obtenue par voie chimique ou enzymatique, ou issue de modification génétique de la souche.

En ce qui concerne le motif pyruvylé, il est à noter que celui-ci peut ou non être présent dans la structure du polymère. Selon un mode de réalisation particulier de l'invention, on met en oeuvre une gomme xanthane désacétylée au sens indiqué précédemment, contenant encore le motif pyruvylé.

Il est entendu que le polysaccharide peut se trouver sous la forme d'un mélange ou se trouver sous une forme unique.

D'une manière préférée, le polysaccharide (ou la gomme xanthane) est sous la forme d'un polymère unique et non d'un mélange de plusieurs formes.

La gomme xanthane désacétylée est un polysaccharide connu de l'homme de l'art, qui peut être obtenu par diverses voies, consistant soit à modifier la gomme xanthane standard par voie chimique ou enzymatique, soit à modifier génétiquement la souche produisant le polysaccharide.

On rappelle tout d'abord que la gomme xanthane est obtenue par fermentation de micro-organismes du genre Xanthomonas, et plus particulièrement par fermentation de micro-organismes choisis parmi les espèces suivantes : Xanthomonas Campestris, Xanthomonas Carotae, Xanthomonas Begoniae, Xanthomonas Hederae, Xanthomonas Incanae, Xanthomonas Malvacearum, Xanthomonas Papavericola, Xanthomonas Phaseoli, Xanthomonas Pisi, Xanthomonas Vasculorum, Xanthomonas Vesicatoria, Xanthomonas Vitians, Xanthomonas Pelargonii. On met plus particulièrement en oeuvre un micro-organisme Xanthomonas Campestris.

Brièvement, il est rappelé que la synthèse de gomme xanthane a lieu par fermentation en milieu aérobie, en inoculant le micro-organisme dans un milieu de culture comprenant, entre autres, des composés carbohydratés tels que le glucose, l'amidon soluble, seuls ou en mélange. Ces composés peuvent se trouver sous une forme raffinée ou brute.

La fermentation a lieu généralement à une température voisine de la température ambiante, bien que des températures plus élevées ne soient pas exclues.

Le polysaccharide obtenu est ensuite séparé du milieu de fermentation par centrifugation ou par filtration. On peut ensuite mettre en oeuvre, éventuellement, une étape de purification. En règle générale, et si elle est réalisée, la purification a lieu par précipitation dans un composé approprié comme le méthanol, l'éthanol, l'acétone, entre autres.

La désacétylation du polysaccharide obtenu, peut être réalisée en mettant en oeuvre des voies chimiques, enzymatiques, ou génétiques.

Selon une première variante, on modifie chimiquement la gomme xanthane produite en éliminant l'acétyle ou les acétyles qu'elle comprend.

Cette opération a lieu en général en mettant en contact le polysaccharide avec une base. Le polysaccharide traité peut être brut ou purifié.

Parmi les bases susceptibles d'être employées, on peut citer tout particulièrement l'hydroxyde de sodium, l'hydroxyde de potassium, éventuellement en présence de chlorure de potassium, l'ammoniaque.

Le pH de la phase aqueuse est compris entre 9 et 12.

L'opération peut avoir lieu sous atmosphère inerte, comme l'azote, ou sous air. Plus particulièrement, on effectue la réaction sous un flux gazeux.

La désacétylation peut avoir lieu à température ambiante ou bien à une température supérieure à la température ambiante de manière à accélérer la réaction. Par exemple, des températures de l'ordre de 100 et 150°C peuvent parfaitement convenir.

La réaction est mise en oeuvre pendant une durée comprise entre plusieurs minutes à 2 heures ou plus.

Il est à noter que la durée de la réaction dépend de la valeur du pH et de la température auxquelles le traitement est réalisé.

La réaction est contrôlée en mesurant la viscosité du moût, de manière à éviter toute dépolymérisation de la gomme xanthane. Ainsi, dès que celle-ci diminue, la réaction est stoppée.

Une fois la réaction achevée, on refroidit si nécessaire le milieu réactionnel puis on ajoute un acide, tel que l'acide chlorhydrique, de manière à obtenir un pH pour la solution aqueuse comprenant le polysaccharide, compris entre 4 et 9, de préférence voisin de 7.

Le polysaccharide résultant peut être récupéré soit par précipitation dans un composé approprié comme notamment les alcools, les imines, les amines, des composés comprenant des ammoniums quaternaires ou des cations polyvalents. On peut de même, et de façon avantageuse, sécher directement le polysaccharide obtenu.

Selon une autre variante, on peut modifier par voie enzymatique la gomme xanthane. Une dernière variante possible consiste à mettre en oeuvre un micro-organisme modifié génétiquement de telle sorte qu'il produise la gomme xanthane non acétylée. Pour cela, on pourra se reporter notamment à la demande WO 92/19753 décrivant diverses méthodes de traitement de souche dans le but d'obtenir des gommes xanthanes modifiées.

Plus particulièrement, la gomme xanthane employée comme constituant des fluides selon l'invention a été obtenue en mettant en oeuvre une souche modifiée génétiquement.

Selon un mode de réalisation préféré de l'invention, on utilise de la gomme xanthane obtenue par fermentation d'une souche correspondant aux références X 1006 et X1910 de la demande de brevet internationale WO 92/19753 précitée, dans les conditions qui y sont décrites. De préférence, on met en oeuvre une gomme xanthane désacétylée obtenue par fermentation de la souche X1910 décrite dans la demande de brevet mentionnée auparavant.

La quantité de gomme xanthane désacétylée entrant dans la composition du fluide selon l'invention est plus particulièrement comprise entre 0,01 et 2 % par rapport au poids total de fluide.

Il est fait remarquer que de très bons résultats en exploitation de puits pétrolifères peuvent être obtenus en mettant en oeuvre des quantités de gomme xanthane désacétylée plus faibles que celles employées avec la gomme xanthane standard. En effet, la gomme xanthane désacétylée, en présence de sels, maintient davantage de viscosité lorsque la température du fluide est augmentée, que la gomme xanthane standard. On obtient donc, à isoconcentration, un niveau de viscosité du fluide au fond du puits, supérieur dans le cas de la présente invention.

La gomme xanthane désacétylée est employée en association avec au moins un composé augmentant la force ionique du milieu. Parmi les composés convenables, on peut citer plus particulièrement les sels d'acides minéraux et éventuellement organiques.

Il est précisé que les composés précités peuvent jouer un rôle supplémentaire dans le fluide de forage, en tant qu'alourdissant en tant qu'agent favorisant la précipitation d'ions particuliers ou encore en tant qu'agent limitant le gonflement de certaines roches. Ceci sera détaillé par la suite.

De préférence, on met en oeuvre des sels solubles, ou au moins partiellement solubles, dans le milieu.

Parmi les sels d'acides minéraux, on peut citer les halogénures de métaux alcalin ou alcalino-terreux, tels que le chlorure de sodium, le chlorure de potassium, le chlorure de césium, le chlorure de magnésium, le bromure de sodium, le bromure de potassium. On peut de même utiliser les sulfates, les carbonates, les bicarbonates, les silicates, les phosphates de métaux alcalins ou alcalino-terreux, seuls ou en mélange. Parmi les sels d'acides organiques, on peut mentionner tout spécialement les formiates de métaux alcalins ou alcalino-terreux, les acétates de métaux alcalins ou alcalino-terreux.

Selon une première variante avantageuse de l'invention, on utilise au moins un sel choisi parmi les halogénures, et plus particulièrement les chlorures de métaux alcalins ou alcalino-terreux.

Plus particulièrement on emploie des sels comme le chlorure de sodium, le chlorure de potassium.

Selon une seconde variante de la présente invention, on utilise au moins un sel choisi parmi les silicates, éventuellement associés aux sels cités pour la première variante. De préférence, on met en oeuvre des silicates de sodium, éventuellement associés. Plus particulièrement on met en oeuvre des silicates dont le rapport molaire Na₂O/SiO₂ est voisin de 1 / 2.

Des fluides comprenant des silicates présentent l'avantage d'inhiber le gonflement des argiles présentes dans la formation, ce qui permet de limiter l'endommagement du puits. Les silicates ont aussi un effet sur la viscosité du fluide et peuvent contribuer à améliorer l'effet réducteur de filtrat.

La teneur en composé augmentant la force ionique du milieu est plus particulièrement comprise entre 5000 et 110000 parties par million

Même si l'on a remarqué que la gomme xanthane désacétylée présentait une aptitude certaine comme réducteur de filtrat, on ne sortirait toutefois pas du cadre de la présente invention en ajoutant un tel type de composé.

Tout au contraire, et cela représente l'une des caractéristiques totalement surprenantes de la présente invention, il est parfaitement avantageux d'associer la gomme xanthane désacétylée, à un réducteur de filtrat usuel dans le domaine. En effet, l'association de ces deux composés provoque une synergie qui est d'autant plus marquée que la boue comprenant ces deux composés a subi un vieillissement à chaud. En d'autres termes, les boues selon l'invention présentent des propriétés qui peuvent s'améliorer en cours d'utilisation, ce qui représente un résultat remarquable et parfaitement inattendu.

D'ailleurs, un autre objet de la présente invention est constitué par un réducteur de filtrat consistant en l'association de gomme xanthane désacétylée, d'au moins un composé augmentant la force ionique du milieu et d'au moins un réducteur de filtrat usuel dans le domaine.

Tout ce qui a été dit auparavant concernant la nature des composés augmentant la force ionique du milieu reste valable et ne sera pas repris dans cette partie de l'exposé.

Il est rappelé que les réducteurs de filtrats sont en règle générale, des composés présentant un poids moléculaire relativement faible. En conséquence, la contribution de ces composés à la viscosité de la formulation est quasiment inexistante lorsque leur teneur reste faible.

A titre d'exemple de composés réducteur de filtrat (ou contrôle de filtrat), on peut citer sans intention de s'y limiter, les composés cellulosiques, les polyacrylamides, les polyacrylates de haut poids moléculaire, les succinoglycanes, l'amidon natif ou ses dérivés, le charbon. Parmi les composés cellulosiques, les celluloses non modifiées ou modifiées chimiquement comme les carboxyméthylcelluloses, les hydroxyéthylcelluloses, les carboxyéthylhydroxyéthylcelluloses sont des composés convenant comme réducteur de filtrat. Les celluloses modifiées à faible ou haut degré de substitution peuvent être convenablement employées. Selon un mode de réalisation particulier, on n'emploie pas de guar.

La quantité de réducteur de filtrat dépend fortement de la nature des roches traversées. En outre, les teneurs ne doivent pas aller au-delà d'un seuil qui les rendraient pénalisantes pour la formulation. En effet, en règle générale, ces composés présentent un profil rhéologique newtonien et non pas rhéofluidifiant. A titre indicatif, la quantité de réducteur de filtrat est habituellement comprise entre 0 et 1% par rapport au poids total du fluide.

Dans le cas présent de l'invention, on peut utiliser la gomme xanthane désacétylée en tant que réducteur de filtrat dans les mêmes quantités.

Les fluides de forage peuvent comprendre aussi des agents fluidifiants ou dispersants. Ainsi, peuvent entrer dans la composition des fluides de forages, des polyphosphates, des tannins, des lignosulfonates, des dérivés de lignine, des tourbes et lignites, des polyacrylates, des polynaphtalène sulfonates, seuls ou en mélange.

La quantité d'agent fluidifiant ou dispersant est variable. A titre indicatif, celle-ci est comprise entre 0 et 1 % par rapport au poids total du fluide.

Le fluide de forage selon l'invention peut comprendre en outre un capteur d'oxygène. Ce type d'additif a pour objet de piéger l'oxygène présent dans les boues de forages et qui peuvent entraîner une dégradation de certains additifs.

Parmi les produits de ce type, on peut citer par exemple les hydroxylamines, l'hydrazine, les sulfites, les bisulfites, les hydrosulfites, les borohydrures.

Selon un mode de réalisation particulier, on utilise l'hydrazine comme capteur d'oxygène car elle n'entraîne pas la formation de précipités insolubles favorisant l'apparition de bouchons dans le puits. L'hydrazine peut se trouver sous une forme anhydre ou hydratée, sous forme de sels comme par exemples les chlorure, sulfate, ou encore sous forme de carbohydrazide.

Généralement la teneur en additif de ce type varie entre 0 et 0,25%.

Le fluide de forage selon l'invention peut comprendre de plus, au moins un composé alourdissant et/ou au moins un colloïde minéral.

Les éléments alourdissants contribuent à maintenir une pression hydrostatique suffisante dans le puits et à maintenir en suspension les roches entraînées lors de l'opération de forage. De tels composés sont classiquement choisis parmi les sels solubles précédemment cités et les sels peu ou très peu solubles. Parmi les sels peu solubles, on peut citer sans intention de s'y limiter, les sulfates, silicates ou carbonates de métaux alcalino-terreux, comme le sulfate de baryum, le carbonate de calcium.

On peut de même utiliser des bromures de métaux alcalino-terreux ou de zinc tels que le bromure de potassium, le bromure de zinc. On peut aussi utiliser des oxydes ou sulfure ou sous arséniate de fer. On peut également utiliser le sulfate de strontium, voire dans certains cas de forte densité du Galene (sulfure de plomb).

Les colloïdes minéraux, qui sont des composés substantiellement insolubles dans les conditions d'utilisation du fluide selon l'invention, sont des agents modifiant la rhéologie du milieu et permettant de maintenir les déblais en suspension dans ce dernier. L'attapulgite, la baryte, la bentonite, seules ou en mélange, en sont les exemples les plus couramment utilisés. Il est à noter que si l'on met en oeuvre un fluide comprenant un colloïde minéral, ce dernier sera de préférence de l'attapulgite.

Les teneurs en alourdissants et en colloïdes minéraux dépendent de plusieurs facteurs qui ne sont pas uniquement techniques. En effet, si ces teneurs sont bien évidemment fixées en fonction de la nature des sols traversés, l'importance du coût engendré par l'usage de ces additifs est prise en compte (présence sur place ou non, coût, etc.).

Bien souvent, et toujours dans le but de minimiser les frais encourus, la préparation du fluide de forage est réalisée avec l'eau présente sur le site de forage. Ainsi, il n'est pas rare de se trouver en présence d'eau de formation (par opposition aux eaux de composition, c'est-à-dire aux eaux préparées dans un but particulier) chargées en sels, comme l'eau de mer, les eaux saumurées ou les eaux dures. Dans ce cas, la teneur en sels dans l'eau employée varie selon la provenance de celle-ci.

Il peut toutefois arriver que l'eau disponible soit de l'eau non ou peu chargée. Dans ce cas, il peut être approprié d'ajouter des sels, tels que des chlorures par exemple.

On peut également ajouter, si nécessaire, des sels minéraux pour favoriser la précipitation de certains ions, s'ils sont présents, et en particulier des ions divalents. On peut mentionner par exemple l'addition de carbonate de soude pour précipiter le calcium, ou le bicarbonate de soude pour précipiter la chaux, notamment lors de reforages dans le ciment. On peut encore citer l'addition de gypse ou de chlorure de calcium pour limiter le gonflement des argiles, l'addition d'hydroxyde de calcium, ou de chaux éteinte, pour débicarbonater des boues contaminées par du dioxyde de carbone.

La teneur en sels est là encore fonction des roches traversées et des eaux disponibles sur le site d'exploitation et l'on peut effectuer les opérations en présence de fluides saturés en sels.

Bien évidemment, le fluide de forage selon la présente invention peut comprendre des additifs habituels de la classe des polysaccharides de haut poids moléculaire, comme le succinoglycane, le wellan, le gellan, utiles en tant que viscosants.

D'autres additifs classiques pour des applications concernant l'exploitation de gisements pétroliers peuvent entrer dans la composition du fluide. Ainsi, on peut mentionner les agents de transfert de radicaux libres, comme les alcools inférieurs, les thiourées, l'hydroquinone ; les biocides, les agents chélatants, les tensioactifs, des anti-mousses, des agents anti-corrosion par exemple.

Ainsi que cela a été indiqué dans ce qui a précédé, le fluide selon la présente invention est particulièrement approprié pour être utilisé en tant que fluide de forage.

A ce sujet, tous les types de forage peuvent convenir, qu'ils soient verticaux, horizontaux ou obliques, tels que ceux qui sont pratiqués sur les plates-formes off shore.

Il est à noter que grâce à ses propriétés (compatibilité avec de nombreux composés notamment) le fluide selon l'invention ne contamine pas le ciment lors des opérations de "work-over". Ces opérations consistent, une fois le forage du puits terminé, à introduire un caisson métallique dans ce puits pour le consolider, puis à couler un ciment entre ce caisson et la paroi du puits.

En outre, moyennant une adaptation des caractéristiques dudit fluide (rhéologie, composition), on peut employer le fluide selon l'invention comme fluide espaceur, par exemple.

Le fluide selon l'invention, toujours après adaptation de sa composition et de ses propriétés rhéologiques, peut de même être mis en oeuvre lors de l'exploitation même du gisement pétrolier, notamment dans la récupération assistée du pétrole. Ainsi, on peut l'employer comme fluide de stimulation, qui représente l'une des méthodes développées pour augmenter le rendement de l'exploitation d'un gisement de pétrole. En effet, ce fluide est introduit dans un autre endroit du gisement et du fait de sa viscosité importante permet l'entraînement d'une quantité supplémentaire de pétrole augmentant ainsi le rendement de l'extraction.

Des exemples concrets mais non limitatifs de l'invention vont maintenant être présentés.

### EXEMPLE 1

Cet exemple a pour objet de montrer la perte relative (en pourcentage) de viscosité de la gomme xanthane standard (comparatif) et de la gomme xanthane désacétylée (selon l'invention).

Les mesures sont réalisées avec des concentrations en gomme xanthane de 0,3 % dans l'eau de mer ASTM, entre 20°C et 120°C. Dans ce cas de figure, la conformation de la gomme xanthane est ordonnée.

Il est à noter que la gomme xanthane désacétylée est obtenue par fermentation de la souche X1910 décrite dans le brevet WO 92/19753.

La fermentation de la souche X1910 est réalisée dans les conditions classiques de fermentation des souche Xanthomonas Campestris. Plus particulièrement, la source de carbone est le glucose. La fermentation a lieu sous air, sous agitation, à une température comprise entre 27 et 30°C, à un pH compris entre 6,5 et 7,5.

Le polysaccharide est récupéré de manière classique.

Les résultats montrent que la gomme xanthane désacétylée, associée à un sel, conserve 15 à 20 % de viscosité en plus dans un intervalle de 100 à 120°C, que la gomme xanthane standard.

Il est par ailleurs à noter que dès 40°C, la gomme xanthane standard a déjà perdu 5 % de viscosité par rapport à la gomme xanthane désacétylée.

L'utilisation de la gomme xanthane désacétylée, conformément à la présente invention, permet donc d'améliorer la suspension des déblais au fond du puits et par conséquent d'améliorer d'autant le nettoyage du trou.

### EXEMPLE 2

Cet exemple a pour but de mesurer l'évolution en fonction de la température, de la rhéologie de solutions salines comprenant d'une part de la gomme xanthane standard (comparatif) et d'autre part, comprenant de la gomme xanthane désacétylée.

Les solutions testées sont des solutions de gomme xanthane (0,3 %) dans de l'eau de mer ASTM, avant et après roulage 16 heures à 120°C.

Les vieillissement sont faits dans des cellules en inox munies d'une enveloppe en Téflon. Les cellules sont pressurisées à l'azote.

Les mesures de la rhéologie ont été effectuées selon les normes A.P.I. (bulletin 13D) au fann 35. La température de la mesure est de 22±1°C, par lecture directe de la déviation du fil de torsion. Les vitesses de rotation sont 600, 300, 200, et 100 tr.min⁻¹.

Les résultats, mesurés à l'aide d'un Fann 35 (Baroid), sont rassemblés dans le tableau suivant :

| **Référence de l'échantillon** | **AVANT ROULAGE A 120°** | | | |
|---|---|---|---|---|
| | 600 tr/min | 300 tr/min | 200 tr/min | 100 tr/min |
| Rhodopol 23P®(comparatif) | 90 | 70 | 61 | 51 |
| Gomme xanthane désacétylée (invention) | 90 | 73 | 62 | 50 |

| **Référence de l'échantillon** | **APRES ROULAGE à 120°** | | | |
|---|---|---|---|---|
| | 600 tr/min | 300 tr/min | 200 tr/min | 100 tr/min |
| Rhodopol 23P® (comparatif) | 36 | 26 | 24 | 18 |
| Gomme xanthane désacétylée (invention) | 88 | 72 | 59 | 47 |

On constate, de façon inattendue, que dans sa forme ordonnée, la gomme xanthane désacétylée est parfaitement stable, tandis que la gomme xanthane standard se dégrade, ce qui modifie le comportement rhéologique de la solution.

### EXEMPLE 3

Le présent exemple a pour objectif de montrer l'évolution du profil de viscosité entre 30 - 115 °C, de boues comprenant de la bentonite, de l'eau de mer, et comprenant un mélange de gomme xanthane et de cellulose polyanionique Drispac Regular, en tant que modificateur de rhéologie et contrôleur de filtrat, et alourdie à la barytine (densité 1,4).

La composition de la boue est la suivante :

| **COMPOSE** | **Unité** | **Fluide A (comp.)** | **Fluide B (inv.)** |
|---|---|---|---|
| Slurry de bentonite 5 % | g | 157,5 | 157,5 |
| Eau de mer ASTM | g | 140,3 | 140,3 |
| Cellulose polyanionique (Drispac Regular ®) | g | 0,5 | 0,5 |
| Gomme xanthane standard (Rhodopol 23P®) | g | 2,3 | - |
| Gomme xanthane désacétylée (selon l'exemple 1) | g | - | 2,3 |
| NaHCO₃ | g | 0,65 | 0,65 |
| Na₂CO₃ | g | 0,22 | 0,22 |
| Dispersant : Polyacrylate 3500 | g | 0,75 | 0,75 |
| Barytine | g | 197,2 | 197,2 |

La bentonite est préhydratée 16 heures (Slurry à 5% dans l'eau) avant la préparation complète de la boue. La barytine est conforme aux spécifications A.P.I.

Les résultats se trouvent sur la figure.

D'après la figure, on constate que, malgré le fait que la température de transition soit la même pour les deux polymères (gomme xanthane standard et désacétylée), environ 118°C, la boue contenant de la gomme xanthane désacétylée selon l'invention, présente toutefois une variation de viscosité avec la température beaucoup plus faible.

Par ailleurs, le tableau ci-dessous montre que la variation de la viscosité avec la température est beaucoup plus faible dans le cas de la présente invention que dans le cas de boues formulées avec de la gomme xanthane standard :

| **Variation de viscosité entre 30 et 115°C** | **Fluide A** | **Fluide B** |
|---|---|---|
| Δη/η (%) | -24 % | -15 % |

Les viscosités initiales des deux fluides, soit 229 mPa.s à 100s⁻¹ pour le fluide A et 234 mPa.s pour le fluide B, sont considérées comme identiques.

Au fond du trou où la température est la plus élevée, on constate une perte de près de 25% de la viscosité initiale de pompage avec un fluide à base de gomme xanthane standard , alors que cette perte est limitée à 15% pour le fluide formulé avec de la gomme désacétylée. Cette différence constitue un avantage important lors de la mise en oeuvre du fluide, notamment en ce qui concerne le nettoyage du puits ainsi que la rapidité de l'opération de forage.

### EXEMPLE 4

Dans cet exemple, les viscosités rolatives des fluides décrits dans l'exemple précédents sont mesurées.

Ainsi, les fluides A et B sont maintenus à 130°C pendant une heure sous cisaillement à 100s⁻¹. On ramène ensuite la température de 130°C à 20°C à raison de 2°C/min et on détermine la différence de viscosité relative entre le fluide initialement porté à la température considérée, soit 30°C, et la viscosité du fluide après un séjour de 1 heure à 130°C à cette même température de 30°C.

Dans leur forme désordonnée, les deux gommes xanthane se dégradent ce qui se traduit par une perte des propriétés initiales de viscosité.

Le tableau ci-dessous indique la perte relative de viscosité après 1 heure à 130°C:

| **Variation de viscosité après le cycle** | **Fluide A** | **Fluide B** |
|---|---|---|
| Δη/η (%) | 37 % | 22 % |

Les variations sont calculées à partir des viscosités apparente 100s⁻¹ à 30°C.

Cependant, le tableau montre aussi clairement que la gomme désacétylée associée à un sel, se dégrade moins que la gomme xanthane standard dans les mêmes conditions.

De ce fait, le fluide B selon l'invention permet de maintenir davantage de viscosité, avec pour conséquence que les ajouts de gomme xanthane pour maintenir constantes les propriétés du fluide de forage sont réduits.

### EXEMPLE 5

Le présent exemple montre le profil rhéologique entre 20 et 140°C d'une boue salée au KCl, comprenant un mélange de gomme xanthane et de cellulose polyanionique, en tant que modificateur de rhéologie et contrôle de filtrat, du glycol et alourdie à la barytine.

La composition de la boue est la suivante :

| **Composé** | **Unité** | **Fluide C** | **Fluide D** |
|---|---|---|---|
| Eau douce | litre | 1 | 1 |
| KCl | g | 150 | 150 |
| Cellulose polyanionique (Drispac Regular®) | g | 1,4 | 1,4 |
| Gomme xanthane standard (Rhodopol 23P®) | g | 6,4 | - |
| Gomme xanthane désacétylée (selon l'exemple 1) | g | - | 6,4 |
| NaHCO₃ | q | 0,65 | 0,65 |
| Glycol | ml | 40 | 40 |
| Barytine | g | 560 | 560 |

La cellulose polyanionique est commercialisée par Drispac, la barytine est conforme aux normes A.P.I.

On constate que la température de transition du polymère est la même pour les deux polymères (gomme xanthane standard et désacétylée) soit 140°C.

Toutefois, la variation de viscosité avec entre 30 et 140°C, du fluide D selon la présente invention est moindre, ainsi que le montre le tableau ci-dessous :

| **Variation de viscosité :** | **Fluide C** | **Fluide D** |
|---|---|---|
| Δη/η (%) | -21 % | -10 % |

Le fluide de forage selon l'invention permet donc de conserver le double de viscosité au fond du trou où la température est la plus élevée, ce qui permet d'améliorer l'efficacité de l'opération de nettoyage et donc augmente la vitesse d'avancement de l'outil.

### EXEMPLE 6

Le présent exemple a pour objet la comparaison des propriétés de réducteur de filtrat des fluides comprenant de la gomme xanthane standard (comparatif) et de la gomme xanthane désacétylée (invention).

Les mesures sont tout d'abord faites sur les fluides C et D défini dans l'exemple précédent, à basse température et pour une pression de 7 bars selon la norme API 13l.

Les boues sont ensuite vieillies thermiquement à 140°C pendant 16 heures suivant le même protocole que dans l'exemple 3.

Les volumes de filtrat A.P.I. sont reportés dans la table ci-dessous :

### 1/ Volume de filtrat A.P.I. avant vieillissement :

| **Ref. fluide** | **Volume de filtrat à 7,5 min. (ml)** | **volume de filtrat à 30 min. (ml)** | **épaisseur du gâteau de filtration (mm)** |
|---|---|---|---|
| **FLUIDE C** | 4,1 | 7,9 | ≈ 1 |
| **FLUIDE D** | 3,5 | 7,3 | ≈ 1 |

### 2/ Volume de filtrat A.P.I. après vieillissement :

| **Ref. fluide** | **Volume de filtrat à 7,5 min. (ml)** | **volume de filtrat à 30 min. (ml)** | **épaisseur du gâteau de filtration (mm)** |
|---|---|---|---|
| **FLUIDE C** | 60 | 151 | 10 |
| **FLUIDE D** | 2,1 | 4,5 | ≈ 1 |

On constate que le fluide formulé avec de la gomme xanthane standard est complètement dégradé avec le traitement thermique ce qui ne permet plus de contrôler le filtrat et risque fortement d'endommager la formation.

En revanche le fluide formulé avec de la gomme xanthane désacétylée, parfaitement stable dans sa forme ordonnée, permet de conserver un excellent contrôle de filtrat avec la formation d'un gâteau compact. On limite ainsi de manière très importante, les risques d'endommagement et de coincement de la tige.

On observe également une synergie entre la cellulose polyanionique et la gomme xanthane désacétylée, ce qui permet d'obtenir un meilleur contrôle de filtrat après la préparation du fluide.

### EXEMPLE 7

Cet exemple a pour but de montrer l'effet de synergie sur les propriétés de contrôle de filtrat de la gomme xanthane désacétylée lorsqu'elle est combinée à un réducteur de filtrat classique, ainsi que la supériorité d'une boue selon l'invention comparée à une boue formulée avec de la gomme xanthane standard.

Pour cela, trois boues ont été préparées, la première selon l'invention, la seconde ne comprenant que le réducteur de filtrat classique.

Les compositions des boues testées sont les suivantes :

| **Composé** | **Fluide E** | **Fluide F** | **Fluide G** |
|---|---|---|---|
| Eau de ville | 1 l | 1 l | 1 l |
| KCl | 150 g | 150 g | 150 g |
| Cellulose polyanionique (Drispac ULV®) | 15,4 g | 15,4 g | 15,4 g |
| Gomme xanthane standard (Rhodopol 23P®) | - | 6,4 g | - |
| Gomme xanthane désacétylée (selon l'exemple 1) | 6,4 g | - | - |
| Na₂CO₃ | 0,65 g | 0,65 g | 0,65 g |
| Glycol | 40 ml | 40 ml | 40 ml |

La préparation a lieu de la manière suivante : on mélange l'eau et le KCl, puis on ajoute le réducteur de filtrat, on introduit ensuite, sous agitation, la gomme xanthane, et enfin le carbonate de sodium et le glycol.

Les boues sont traitées de la même manière que décrit dans l'exemple précédent.

### 1/ Volume de filtrat A.P.I. avant vieillissement :

| **Ref. fluide** | **Volume de filtrat à 7,5 min. (ml)** | **volume de filtrat à 30 min. (ml)** | **épaisseur du gâteau de filtration (mm)** |
|---|---|---|---|
| **FLUIDE E** | 5 | 8,5 | ≈ 1 |
| **FLUIDE F** | 4,5 | 7,5 | ≈ 1 |
| **FLUIDE G** | 20,5 | 25,2 | ≈ 1 |

### 2/ Volume de filtrat A.P.I. après vieillissement :

| **Ref. fluide** | **Volume de filtrat à 7,5 min. (ml)** | **volume de filtrat à 30 min. (ml)** | **épaisseur du gâteau de filtration (mm)** |
|---|---|---|---|
| **FLUIDE E** | 2,3 | 5,8 | ≈ 1 |
| **FLUIDE F** | 9 | 16 | ≈ 1 |
| **FLUIDE G** | 29,5 | 35 | ≈ 1 |

Ces résultats montrent que, avant vieillissement à chaud, la gomme xanthane selon l'invention, associée à un réducteur de filtrat, de même que la gomme xanthane désacétylée associée à ce même réducteur de filtrat, donnent de bien meilleurs résultats que ce réducteur de filtrat seul.

Par contre, après roulage à chaud, on constate que la gomme xanthane désacétylée, associée à un réducteur de filtrat, donne des résultats remarquables et totalement inattendus.

En effet, alors que les propriétés des boues des fluides F et G ont considérablement diminuées, les propriétés du fluide E selon l'invention n'a pas décru, alors que ce résultat était attendu. Au contraire, les résultats ont été améliorés de façon significative.

### EXEMPLE 8

Cet exemple a pour but de montrer que l'effet de synergie de la gomme xanthane désacétylée existe avec un autre réducteur de filtrat.

On a testé les boues de compositions suivantes :

| **Composé** | **unité** | **Fluide H** | **Fluide I** |
|---|---|---|---|
| Eau de ville | g | 350 | 350 |
| KCl | g | 54 | 54 |
| Cellulose polyanionique (Drispac Regular®) | g | 1 | 1 |
| Gomme xanthane désacétylée (selon l'exemple 1) | g | 2 | - |
| Na₂CO₃ | g | 0,25 | 0,25 |
| Glycol | ml | 15 | 15 |

Les boues ont été testées de la même façon que pour les exemples 6 et 7.

Les résultats sont rassemblés ci-dessous :

### 1/ Volume de filtrat A.P.I. avant vieillissement :

| **Ref. fluide** | **Volume de filtrat à 7,5 min. (ml)** | **volume de filtrat à 30 min. (ml)** | **épaisseur du gâteau de filtration (mm)** |
|---|---|---|---|
| **FLUIDE H** | 12 | 16,5 | ≤ 1 |
| **FLUIDE I** | 140 | 170 | ≤1 |

### 2/ Volume de filtrat A.P.I. après vieillissement :

| **Ref. fluide** | **Volume de filtrat à 7,5 min. (ml)** | **volume de filtrat à 30 min. (ml)** | **épaisseur du gâteau de filtration (mm)** |
|---|---|---|---|
| **FLUIDE H** | 6 | 10,6 | ≤ 1 |
| **FLUIDE I** | non mesurable | non mesurable | non mesurable |

On constate que le fluide H selon l'invention présente avant vieillissement à chaud, de meilleurs propriétés de contrôle de filtrat que le fluide I.

En outre, les propriétés de contrôle de filtrat du fluide H sont améliorées après traitement thermique.

Par contre, celles du fluide I ont été totalement dégradées et aucune mesure de contrôle de filtrat n'a été possible.

## Revendications

1. Composition exempte de guar, comprenant de la gomme xanthane désacétylée, sous la forme d'un polypentamère, en association avec au moins un composé choisi parmi les sels d'acides minéraux ou organiques, et avec au moins un réducteur de filtrat.

2. Composition selon la revendication précédente, **caractérisée en ce que** la gomme xanthane désacétylée est obtenue par un procédé mettant en oeuvre une désacétylation par voie enzymatique ou après modification génétique de la souche produisant la gomme xanthane.

3. Composition selon l'une des revendications précédentes, **caractérisée en ce qu'**elle comprend 0,01% à 2 % en gomme xanthane désacétylée.

4. Composition selon l'une quelconque des revendications précédentes, **caractérisée en ce que** les sels d'acides minéraux ou organiques sont choisis parmi les halogénures, les sulfates, les carbonates, les bicarbonates, les silicates, les phosphates, les formiates de métaux alcalins ou alcalino-terreux, les acétates de métaux alcalins ou alcalino-terreux, seuls ou en mélange.

5. Composition selon l'une quelconque des revendications précédentes, **caractérisée en ce que** le composé est choisi parmi les chlorures de métaux alcalins ou alcalino-terreux.

6. Composition selon l'une quelconque des revendications précédentes, **caractérisée en ce que** le composé est choisi parmi les silicates de sodium.

7. Composition selon l'une quelconque des revendications précédentes, **caractérisée en ce que** la teneur en composé est comprise entre 5000 et 110000 parties par million.

8. Composition selon l'une quelconque des revendications précédentes, **caractérisée en ce que** la gomme xanthane présente un taux d'acétyle inférieur à 3% de préférence compris entre 0 et 2%.

9. Composition selon l'une quelconque des revendications précédentes, **caractérisée en ce que** la quantité de réducteur de filtrat est comprise entre 0 exclu et 1 % par rapport au poids total de la composition. /

10. Composition selon la revendication précédente, **caractérisée en ce que** le réducteur de filtrat est choisi parmi les composés cellulosiques, les polyacrylamides, les polyacrylates de haut poids moléculaire, les succinoglycanes, l'amidon natif ou ses dérivés, le charbon, seuls ou en combinaison.

11. Composition selon l'une quelconque des revendications précédentes, **caractérisée en ce qu'**elle comprend un agent fluidifiant ou dispersant avec une quantité comprise entre 0 exclu et 1 % par rapport au poids total de la composition.

12. Composition selon la revendication précédente, **caractérisée en ce que** l'agent fluidifiant ou dispersant est choisi parmi les polyphosphates, les tanins, les lignosulfonates, les dérivés de lignine, les tourbes, les lignites, les polyacrylates, les polynaphtalènes sulfonates, seuls ou en mélange.

13. Composition selon l'une quelconque des revendications précédentes, **caractérisée en ce qu'**elle comprend un capteur d'oxygène avec une teneur comprise entre 0 exclu et 0,25 % par rapport au poids total du fluide.

14. Composition selon l'une des revendications précédentes, **caractérisée en ce qu'**elle comprend un composé alourdissant choisi parmi les sulfates, les carbonates, les silicates de métaux alcalino-terreux, les bromures de métaux alcalino-terreux ou de zinc, les oxydes de fer.

15. Composition selon l'une quelconque des revendications précédentes, **caractérisée en ce qu'**elle comprend au moins un colloïde minéral, choisi parmi l'attapulgite, la baryte, la bentonite, seules ou en mélange.

16. Composition selon l'une quelconque des revendications précédentes, **caractérisée en ce qu'**elle comprend de l'eau.

17. Utilisation de gomme xanthane désacétylée, sous la forme d'un polypentamère, obtenue par un procédé mettant en oeuvre une désacétylation par voie enzymatique, où aprés modification génétique de la souche produisant la gomme xanthane, en association avec au moins un composé choisi parmi les sels d'acides minéraux ou organiques, dans un fluide exempt de guar, mis en oeuvre dans l'exploitation du pétrole, à une température supérieure à 80 °C, de préférence comprise entre 80°C (exclue) et 140°C.

18. Utilisation de gomme xanthane désacétylée, sous la forme d'un polypentamère, en association avec au moins un composé choisi parmi les sels d'acides minéraux ou organiques, comme réducteur de filtrat dans des fluides de forage pétrolier.

19. Utilisation selon la revendication précédente, **caractérisée en ce que** la gomme xanthane désacétylée est obtenue par un procédé mettant en oeuvre une désacétylation par voie enzymatique ou après modification génétique de la souche produisant la gomme xanthane.

20. Utilisation selon l'une quelconque des revendications 16 à 18, **caractérisée en ce que** la gomme xanthane désacétylée comprend en outre un réducteur de filtrat usuel dans le domaine.

21. Utilisation selon l'une des revendications 19 ou 20, **caractérisée en ce que** le réducteur de filtrat usuel est choisi parmi les composés cellulosiques, les polyacrylamides, les polyacrylates de haut poids moléculaire, les succinoglycanes, l'amidon natif ou ses dérivés, le charbon.

## Claims

1. A guar-free composition comprising deacetylated xanthan gum in the form of a polypentamer, in association with at least one compound selected from salts of mineral or organic acids, and with at least one fluid loss control agent.

2. A composition according to the preceding claim, **characterized in that** the deacetylated xanthan gum is obtained by a process employing deacetylation by an enzymatic route or after genetic modification of the strain producing the xanthan gum.

3. A composition according to one of the preceding claims, **characterized in that** it comprises 0.01% to 2% of deacetylated xanthan gum.

4. A composition according to any one of the preceding claims, **characterized in that** the salts of mineral or organic acids are selected from alkali or alkaline-earth metal halides, sulphates, carbonates, bicarbonates, silicates, phosphates and formats and from alkali or alkaline-earth metal acetates, used alone or as a mixture.

5. A composition according to any one of the preceding claims, **characterized in that** the compound is selected from alkali or alkaline-earth metal chlorides.

6. A composition according to any one of the preceding claims, **characterized in that** the compound is selected from sodium silicates.

7. A composition according to any one of the preceding claims, **characterized in that** the amount of the compound is in the range 5000 to 110000 parts per million.

8. A composition according to any one of the preceding claims, **characterized in that** the xanthan gum has an acetyl content of less than 3%, preferably in the range 0 to 2%.

9. A composition according to any one of the preceding claims, **characterized in that** the quantity of fluid loss control agent is in the range 0 (excluded) to 1% with respect to the total composition weight.

10. A composition according to the preceding claim, **characterized in that** the fluid loss control agent is selected from cellulose compounds, polyacrylamides, high molecular weight polyacrylates, succinoglycanes, native starch or its derivatives and coal, used alone or in combination.

11. A composition according to any one of the preceding claims, **characterized in that** it comprises a thinner or dispersing agent in a quantity in the range 0 (excluded) to 1% with respect to the total composition weight.

12. A composition according to the preceding claim, **characterized in that** the thinner or dispersing agent is selected from polyphosphates, tannins, lignosulphonates, lignin derivatives, peats, lignites, polyacrylates and polynaphthalene sulphonates, used alone or as a mixture.

13. A composition according to any one of the preceding claims, **characterized in that** it comprises an oxygen scavenger in an amount in the range 0 (excluded) to 0.25% with respect to the total fluid weight.

14. A composition according to any one of the preceding claims, **characterized in that** it comprises a weighting compound selected from alkaline-earth metal sulphates, carbonates or silicates, alkaline-earth metal or zinc alkaline-earth bromides and iron oxides.

15. A composition according to any one of the preceding claims, **characterized in that** it comprises at least one mineral colloid selected from attapulgite, barite and bentonite, used alone or as a mixture.

16. A composition according to any one of the preceding claims, **characterized in that** it comprises water.

17. Use of deacetylated xanthan gum in the form of a polypentamer obtained by a process employing deacetylation by an enzymatic route or after genetic modification of the strain producing the xanthan gum, in association with at least one compound selected from salts of mineral or organic acids, in a guar-free fluid employed in oil exploration at a temperature of more than 80°C, preferably in the range 80°C (excluded) to 140°C.

18. Use of deacetylated xanthan gum in the form of a polypentamer, in association with at least one compound selected from salts of mineral or organic acids, as a fluid loss control agent in oil drilling fluids.

19. Use according to the preceding claim, **characterized in that** the deacetylated xanthan gum is obtained by a process employing deacetylation by an enzymatic route or after genetic modification of the strain producing the xanthan gum.

20. Use according to any one of claims 16 to 18, **characterized in that** the deacetylated xanthan gum further comprises a conventional fluid loss control agent.

21. Use according to one of claims 9 to 20, **characterized in that** the conventional fluid loss control agent is selected from cellulose compounds, polyacrylamides, high molecular weight polyacrylates, succinoglycanes, native starch or its derivatives, and coal.

## Patentansprüche

1. Guarfreie Zusammensetzung, enthaltend deacetyliertes Xanthangummi in Form eines Polypentamers zusammen mit mindestens einer Verbindung, ausgewählt aus Salzen organischer oder anorganischer Säuren, und mit mindestens einem Filtratverminderer.

2. Zusammensetzung nach dem vorangehenden Anspruch, **dadurch gekennzeichnet, daß** das deacetylierte Xanthangummi durch ein Verfahren erhalten ist, bei welchem man eine Deacetylierung auf enzymatischem Weg oder nach genetischer Modifikation des das Xanthangummi erzeugenden Stammes durchfährt.

3. Zusammensetzung nach einem der vorangehenden Ansprüche, **dadurch gekennzeichnet, daß** sie 0,01 % bis 2 % deacetyliertes Xanthangummi enthält.

4. Zusammensetzung nach einem der vorangehenden Ansprüche, **dadurch gekennzeichnet, daß** die Salze von organischen oder anorganischen Säuren ausgewählt sind aus Halogeniden, Sulfaten, Carbonaten, Bicarbonaten, Silikaten, Phosphaten, Formiaten von Alkali- oder Erdalkalimetallen und Acetaten von Alkali- oder Erdalkalimetallen, entweder allein oder in Mischung.

5. Zusammensetzung nach einem der vorangehenden Ansprüche, **dadurch gekennzeichnet, daß** die Verbindung ausgewählt ist aus Alkalimetall- oder Erdalkalimetallchloriden.

6. Zusammensetzung nach einem der vorangehenden Ansprüche, **dadurch gekennzeichnet, daß** die Verbindung ausgewählt ist aus Natriumsilikaten.

7. Zusammensetzung nach einem der vorangehenden Ansprüche, **dadurch gekennzeichnet, daß** der Gehalt an der Verbindung 5.000 bis 110.000 Teile pro Million beträgt.

8. Zusammensetzung nach einem der vorangehenden Ansprüche, **dadurch gekennzeichnet, daß** das Xanthangummi einen Acetylgehalt von weniger als 3 %, vorzugsweise zwischen 0 und 2 %, aufweist.

9. Zusammensetzung nach einem der vorangehenden Ansprüche, **dadurch gekennzeichnet, daß** die Menge an Filtratverminderer, bezogen auf das Gesamtgewicht der Zusammensetzung, zwischen 0 (ausschließlich) und 1 % liegt.

10. Zusammensetzung nach dem vorangehenden Anspruch, **dadurch gekennzeichnet, daß** der Filtratverminderer ausgewählt ist aus Celluloseverbindungen, Polyacrylamiden, Polyacrylaten hoher Molekularmasse, Succinoglykanen, natürlicher Stärke oder ihren Derivaten und Kohle, entweder allein oder in Mischung.

11. Zusammensetzung nach einem der vorangehenden Ansprüche, **dadurch gekennzeichnet, daß** sie ein Fluidisier- oder Dispergiermittel mit einer Menge von 0 (ausgenommen) und 1 %, bezogen auf das Gesamtgewicht der Zusammensetzung, enthält.

12. Zusammensetzung nach dem vorangehenden Anspruch, **dadurch gekennzeichnet, daß** das Fluidisier- oder Dispergiermittel ausgewählt ist aus Polyphosphaten, Tanninen, Lignosulfonaten, Ligninderivaten, Torf, Ligniten, Polyacrylaten und Polynaphthalinsulfonaten, entweder allein oder in Mischung.

13. Zusammensetzung nach einem der vorangehenden Ansprüche, **dadurch gekennzeichnet, daß** sie einen Sauerstoffänger mit einem Gehalt zwischen 0 (ausschließlich) und 0,25 %, bezogen auf das Gesamtgewicht des Fluids (Mediums) bzw. der Flüssigkeit, enthält.

14. Zusammensetzung nach einem der vorangehenden Ansprüche, **dadurch gekennzeichnet, daß** sie eine Beschwerungsverbindung enthält, ausgewählt aus Sulfaten, Carbonaten, Erdalkalimetallsilikaten, Erdalkali- oder Zinkbromiden und Eisenoxiden.

15. Zusammensetzung nach einem der vorangehenden Ansprüche, **dadurch gekennzeichnet, daß** sie mindestens ein anorganisches Kolloid enthält, ausgewählt aus Attapulgit, Baryt und Bentonit, entweder allein oder in Mischung.

16. Zusammensetzung nach einem der vorangehenden Ansprüche, **dadurch gekennzeichnet, daß** sie Wasser enthält.

17. Verwendung von deacetyliertem Xanthangummi in Form eines Polypentamers, erhalten durch ein Verfahren, bei welchem man eine Deacetylierung auf enzymatischem Weg oder nach genetischer Modifikation des das Xanthangummi erzeugenden Stammes durchführt, zusammen mit mindestens einer Verbindung, ausgewählt aus Salzen organischer oder anorganischer Säuren, in einer guarfreien Flüssigkeit, eingesetzt bei der Erschließung bzw. Gewinnung von Erdöl bei einer Temperatur oberhalb von 80 °C, vorzugsweise zwischen 80 °C (ausgenommen) und 140 °C.

18. Verwendung von deacetyliertem Xanthangummi in Form eines Polypentamers zusammen mit mindestens einer Verbindung, ausgewählt aus Salzen organischer oder anorganischer Säuren, als Filtratverminderer in Bohrmedien bzw. -flüssigkeiten für die Erdölförderung.

19. Zusammensetzung nach dem vorangehenden Anspruch, **dadurch gekennzeichnet, daß** das deacetylierte Xanthangummi durch ein Verfahren erhalten ist, bei dem man eine Deacetylierung auf enzymatischem Weg oder nach genetischer Modifikation des das Xanthangummi erzeugenden Stammes durchführt.

20. Verwendung nach einem der Ansprüche 16 bis 18, **dadurch gekennzeichnet, daß** das deacetylierte Xanthangummi außerdem einen auf diesem Gebiet üblichen Filtratverminderer enthält.

21. Verwendung nach einem der Ansprüche 19 oder 20, **dadurch gekennzeichnet, daß** der übliche Filtratverminderer ausgewählt ist aus Celluloseverbindungen, Polyacrylamiden, Polyacrylaten hoher Molekularmasse, Succinoglykanen, natürlicher Stärke oder ihren Derivaten und Kohlenstoff.
